# FASCICULE DE BREVET EUROPEEN

(11) **EP 2 783 485 B1**
(45) Date de publication et mention de la délivrance du brevet: **30.12.2015**
(21) Numéro de dépôt: 12787034.3
(22) Date de dépôt: 19.11.2012
(51) Int. Cl.: H04L 12/43, H04L 12/24, H04L 12/433, H04L 12/863

(54) **RÉSEAU DE TRANSMISSION D'INFORMATIONS ET NOEUD DE RÉSEAU PROGRAMMABLE**
DATENÜBERTRAGUNGSNETZWEK UND PROGRAMMIERBARER NETZWERKKNOTEN
DATA TRANSMISSION NETWORK AND PROGRAMMABLE NETWORK NODE

(30) Priorité: 22.11.2011 FR 1103548
(43) Date de publication de la demande: 01.10.2014
(73) Titulaire: THALES, 92200 Neuilly-sur-Seine (FR); Systemes Embarques Aerospatiaux, 75015 Paris (FR)
(72) Inventeur: DUBROVIN, Alexis, F-92362 Meudon La Foret (FR); MIGNOT, Augustin, F-92362 Meudon La Foret (FR); ORTAIS, Paul, F-92362 Meudon La Foret (FR)
(74) Mandataire: Domenego, Bertrand
(86) Numéro de dépôt international: PCT/EP2012/073001
(87) Numéro de publication internationale: WO 2013/076044

(56) Documents cités:
- EP-A1- 0 535 428
- EP-A1- 2 093 941
- DE-A1- 4 113 613
- US-A- 4 482 980
- US-A- 5 933 258

## Description

La présente invention concerne un réseau de transmission d'informations et un noeud de réseau correspondant.

Plus particulièrement, l'invention se rapporte à un tel réseau qui comporte des noeuds fonctionnels raccordés en série par des moyens de transmission d'informations, dans lequel les informations se présentent sous la forme de messages discrets se propageant de noeud en noeud dans le réseau.

On connaît le document EP 2 093 941 décrivant un tel réseau de transmission d'information.

On connaît également du document FR A 2 857 805 un procédé et un dispositif de transmission de données.

Un tel procédé et un tel système sont mis en oeuvre par exemple dans un système fermé de calculateurs de contrôle embarqué par exemple dans un véhicule aérien ou terrestre.

Le procédé décrit dans ce document comporte une étape de transmission de données point à point entre deux noeuds de transmission par exemple via un réseau filaire, chaque noeud possédant un ou plusieurs canaux autorisant chacun la transmission avec un unique noeud, une étape de conversion des données pour leur transmission, par exemple en série, et le calculateur de chacun des noeuds répond à la réception d'un message par une transmission inconditionnelle qui propage les flux d'informations le long de chaînes fermées, le contrôle de flux de données étant alors déterminé implicitement par la topologie câblée mise en oeuvre, et la transmission entre noeuds utilise un mode asynchrone ou isochrone.

Tout en se basant sur l'utilisation d'un tel réseau dans lequel des noeuds fonctionnels sont raccordés en série par des moyens de transmission d'informations, l'invention cherche à optimiser un certain nombre de caractéristiques de ces réseaux, comme par exemple leur fiabilité, leur débit, la prise en charge des modes de défaillance, etc...

A cet effet, l'invention a pour objet un réseau de transmission d'informations, du type comportant des noeuds fonctionnels raccordés en série par des moyens de transmission d'informations, dans lequel les informations se présentent sous la forme de messages discrets se propageant de noeud en noeud dans le réseau, caractérisé en ce que :
- les moyens de transmission d'informations entre les noeuds sont bidirectionnels pour permettre à des informations de se propager dans les deux sens de circulation du réseau,
- chaque noeud comporte au moins un premier et un deuxième ports associés par programmation, d'entrée/sortie d'informations, raccordés par des moyens de transmission d'informations correspondants à des noeuds voisins et dont le fonctionnement est piloté de façon exclusive et séquentielle, par des moyens formant automate de communication, entre un mode de fonctionnement en réception asynchrone d'informations de ses noeuds voisins et un mode de fonctionnement en émission synchrone d'informations vers ses noeuds voisins.

Selon d'autres aspects avantageux de l'invention, le réseau suivant l'invention comprend une ou plusieurs caractéristiques des revendications 2 à 20 prises seules ou en combinaison. :

Selon un autre aspect l'invention a également pour objet un noeud de réseau correspondant.

L'invention sera mieux comprise à l'aide de la description qui va suivre, donnée uniquement à titre d'exemple et faite en se référant aux dessins annexés sur lesquels :
- la figure 1 représente un schéma synoptique illustrant la structure générale de noeuds fonctionnels raccordés en série dans un réseau de transmission d'informations selon l'invention,
- la figure 2 représente un schéma synoptique illustrant la structure générale d'un exemple de réalisation d'un noeud entrant dans la constitution d'un réseau de transmission selon l'invention,
- les figues 3 et 4 illustrent le principe général de fonctionnement d'un réseau de transmission d'informations selon l'invention,
- la figure 5 illustre le basculement du fonctionnement d'un noeud entre son mode de réception et son mode d'émission,
- la figure 6 illustre de façon détaillée une structure à registres entrant dans la constitution d'un noeud,
- la figure 7 illustre le fonctionnement normal d'un noeud entrant dans la constitution d'un réseau selon l'invention,
- la figure 8 représente un mode dégradé de fonctionnement d'un réseau de transmission selon l'invention,
- la figure 9 illustre la structure d'un noeud comportant plus de deux ports d'entrée et de sortie d'informations,
- la figure 10 illustre un exemple de réalisation d'un réseau constitué à partir de noeuds, et
- la figure 11 illustre un exemple de réalisation d'un format de trame de messages utilisés dans un réseau de transmission selon l'invention.

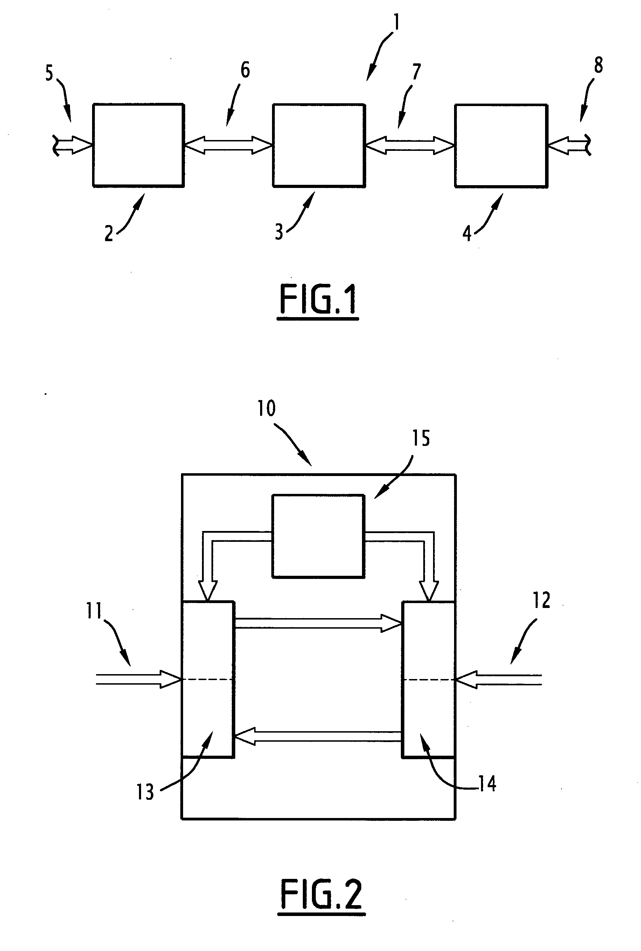

On a en effet illustré, sur la figure 1, un exemple de réalisation d'une portion d'un réseau de transmission d'informations qui comporte des noeuds fonctionnels raccordés en série par des moyens de transmission d'informations.

Sur cette figure 1, le réseau est désigné par la référence générale 1 et comporte dans l'exemple décrit trois noeuds désignés par les références 2, 3 et 4 respectivement.

Ces noeuds fonctionnels sont donc raccordés en série par des moyens de transmission d'informations désignés par exemple par les références 5, 6, 7 et 8 respectivement.

Ces moyens de transmission d'informations peuvent être basés sur des moyens de transmission filaires formés par exemple par des paires de fils torsadés ou encore des câbles coaxiaux ou autres.

Cependant, d'autres modes de réalisation peuvent être envisagés tels que par exemple l'utilisation de fibres optiques, ou autre, de même que des moyens de liaison sans fil comme par exemple acoustique.

Ce réseau est alors adapté pour transmettre des informations qui se présentent sous la forme de messages discrets se propageant de noeud en noeud dans le réseau.

Dans le réseau de transmission selon l'invention, les moyens de transmission d'informations entre les noeuds sont bidirectionnels pour permettre à des informations de se propager dans les deux sens de circulation du réseau.

Un tel fonctionnement est par exemple illustré sur les figures 2, 3 et 4.

Sur la figure 2 on a illustré un exemple de réalisation d'un noeud entrant dans la constitution d'un tel réseau, ce noeud étant désigné par la référence générale 10.

Ce noeud est alors raccordé par exemple par l'intermédiaire de deux moyens de transmission d'informations respectivement 11 et 12 à des noeuds voisins dans le réseau.

En fait, chaque noeud comporte au moins un premier et un deuxième ports associés d'entrée et de sortie d'informations, désignés par les références par exemple 13 et 14 sur cette figure 2, raccordés par les moyens de transmission d'informations correspondants 11 et 12 respectivement aux noeuds voisins dans le réseau. Le fonctionnement de ces ports associés d'entrée et de sortie d'informations est alors piloté de façon séquentielle et exclusive, par des moyens formant automate de communication désignés par la référence générale 15, entre un mode de fonctionnement en réception asynchrone d'informations des noeuds voisins et un mode de fonctionnement en émission synchrone d'informations vers les noeuds voisins.

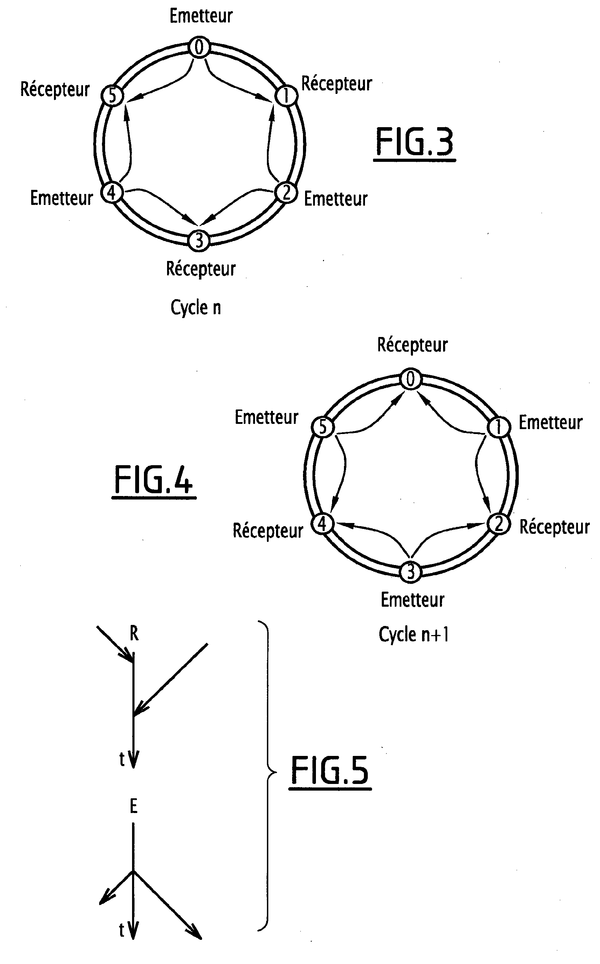

On conçoit alors que, rapporté à un réseau tel que celui illustré sur les figures 3 et 4, dans lequel les noeuds sont par exemple raccordés en boucle fermée, chaque noeud bascule de façon exclusive et séquentielle, entre un fonctionnement en émetteur d'informations vers ses noeuds voisins, qui sont alors en mode de fonctionnement en réception, et un fonctionnement en réception d'informations de ses voisins qui sont alors eux en mode de fonctionnement en émission.

Les figures 3 et 4 illustrent en effet deux cycles successifs n et n+1, permettant aux noeuds de transmettre les informations dans le réseau.

En fait, et comme cela est illustré sur la figure 5, pour chaque noeud, le basculement entre le mode de réception R et le mode d'émission E, est déclenché par l'automate de communication à partir du moment où le noeud correspondant a reçu des informations de ses voisins. C'est dans ce sens que l'on utilise l'expression « mode de fonctionnement en réception asynchrone d'informations de ses noeuds voisins ».

Une fois des informations reçues de ses voisins, l'automate de communication fait alors basculer les ports associés correspondants du noeud vers leur mode de fonctionnement en émission, tous les ports associés du noeud passant alors en mode d'émission d'informations vers les noeuds voisins. C'est dans ce sens que l'on utilise l'expression « mode de fonctionnement en émission synchrone d'informations vers les noeuds voisins».

En fait, l'automate de communication est adapté pour faire basculer l'ensemble des ports associés du noeud de leur mode de fonctionnement en réception vers leur mode de fonctionnement en émission après, pour chacun de ceux-ci, soit la réception d'informations valides, soit l'expiration d'une période de temps prédéterminée de non réception d'informations valides.

Dans l'autre sens, l'automate de communication est adapté pour faire basculer en retour chacun des ports associés, de son mode de fonctionnement en émission E vers son mode de fonctionnement en réception R, après la fin de l'émission des informations par le port.

On conçoit alors que ceci permet d'éviter toute collision de messages sur les moyens de transmission d'informations, dans la mesure où en fait des noeuds voisins ne peuvent pas émettre en même temps sur les moyens de transmission d'informations les reliant l'un à l'autre.

Comme cela a été indiqué dans le document antérieur précité, ceci permet d'éviter l'utilisation dans les noeuds, de moyens extrêmement lourds de gestion des collisions sur le réseau ce qui se traduit par une simplification très importante de ceux-ci.

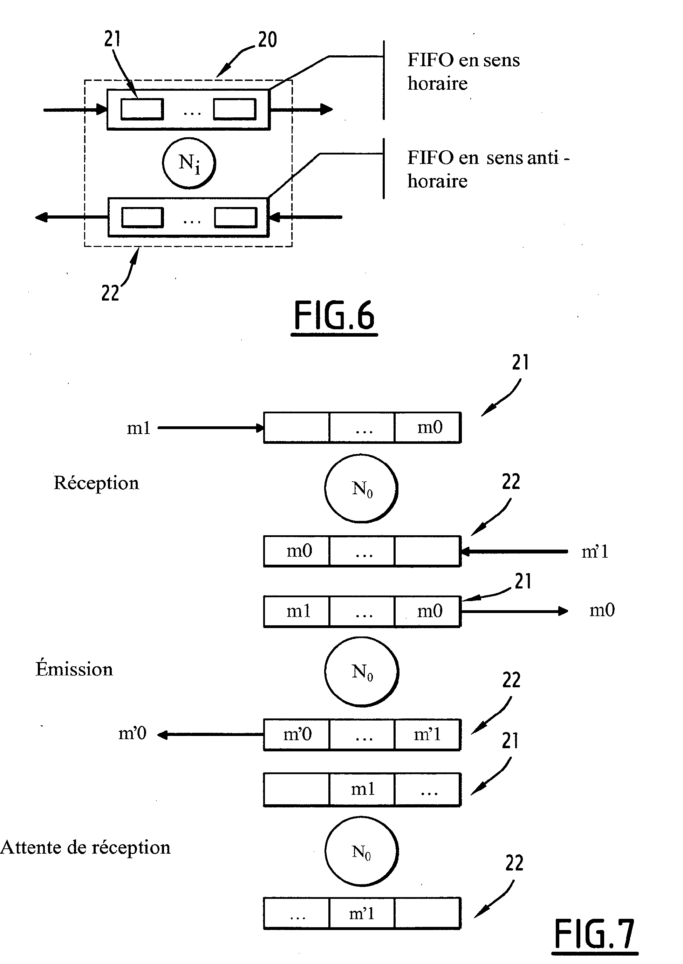

Un exemple de réalisation d'un tel noeud est illustré sur la figure 6.

En fait, le noeud illustré sur cette figure est désigné par la référence générale 20 et les ports associés de celui-ci comprennent par exemple des moyens en forme de registres FIFO « First In-First Out », montés tête-bêche entre les moyens de transmission d'informations raccordant ce noeud à ses voisins.

Bien entendu toute autre structure utilisant des moyens en forme de tampon en logique premier entré premier sorti peut également être utilisée.

Ces moyens en forme de registres FIFO sont désignés par les références générales 21 et 22.

L'un de ces moyens permet alors de transmettre les informations dans un sens et l'autre dans l'autre sens du réseau. Ces moyens en forme de registres reçoivent en effet des informations en provenance d'un noeud pour les transmettre en les propageant à l'autre noeud voisin et inversement.

Le fonctionnement d'un tel noeud est illustré sur la figure 7.

On reconnaît en effet sur cette figure les registres 21 et 22 décrits précédemment dans leurs différents états en fonction de l'état dans lequel est le noeud sous la commande de l'automate de communication.

Le premier état illustré dans la partie supérieure de cette figure, est l'état du noeud en réception d'informations.

Chaque moyen en forme de registre FIFO 21, 22 a déjà en mémoire un message reçu précédemment et désigné par m0 et m'0 pour les messages circulant dans l'un et l'autre sens de ce réseau.

Dans l'état illustré dans la partie supérieure de la figure, le noeud est en mode de fonctionnement de réception de messages suivants, comme par exemple les messages m1 et m'1.

Une fois les deux messages m1 et m'1 reçus, le noeud passe, comme décrit précédemment, sous la commande de l'automate de communication, en mode d'émission des messages précédents, c'est-à-dire de m0 et m'0 qui sont alors émis vers les noeuds voisins correspondants.

Cet état est illustré dans la partie intermédiaire de cette figure 7.

Dans la partie inférieure de cette figure 7, les messages m0 et m'0 ont été émis de sorte que le noeud passe alors en attente de réception de messages de la part de ses voisins et ainsi de suite.

On conçoit alors que les messages sont mis en file d'attente et sont émis dès que de nouveaux messages sont reçus.

Comme cela a été indiqué précédemment, dans le cas nominal de fonctionnement de ce réseau, c'est-à-dire quand tous les noeuds et tous les moyens de transmission d'informations sont opérationnels, le réseau permet alors une circulation complète des informations dans les deux sens de circulation des messages sur le réseau.

Ainsi par exemple, et dans le cas où celui-ci est formé par des noeuds connectés en boucle fermée, le réseau peut alors être assimilé à deux anneaux logiques dans lesquels des messages circulent.

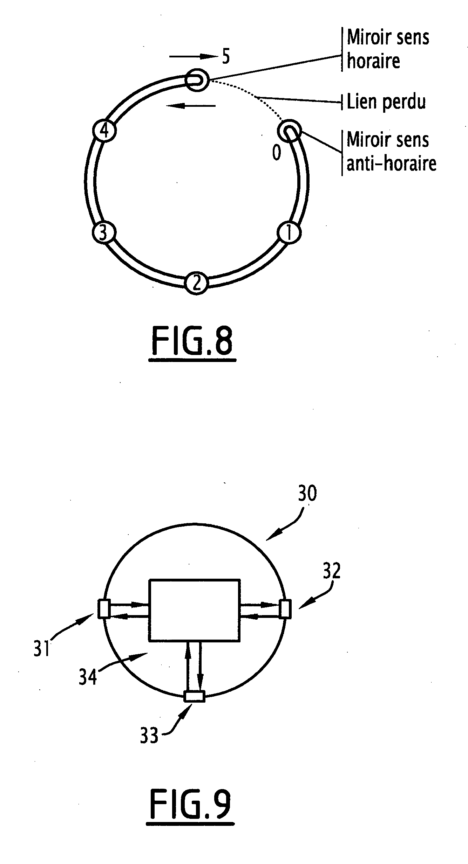

En cas de perte de l'un des moyens de transmission d'informations entre deux noeuds voisins, comme cela est illustré sur la figure 8, la topologie de communication est modifiée pour restituer un anneau unique.

Dans ce cas, les noeuds d'extrémités de la branche ainsi formée sont adaptés pour fonctionner en mode miroir de renvoi des informations vers le noeud voisin émetteur.

Ceci est alors réalisé par pilotage des ports correspondants de ces noeuds par les moyens formant automate de communication correspondants. Ces moyens formant automate détectent alors ce dysfonctionnement et commandent un basculement des ports en mode miroir.

Comme cela a été indiqué précédemment, des noeuds du réseau peuvent également comporter plus de deux ports d'entrée et de sortie associés comme celui illustré sur la figure 9.

Le noeud représenté sur cette figure, et désigné par la référence générale 30, comporte alors par exemple trois ou plus de ports associés désignés par les références 31, 32 et 33, associés éventuellement à des moyens de routage 34 d'informations.

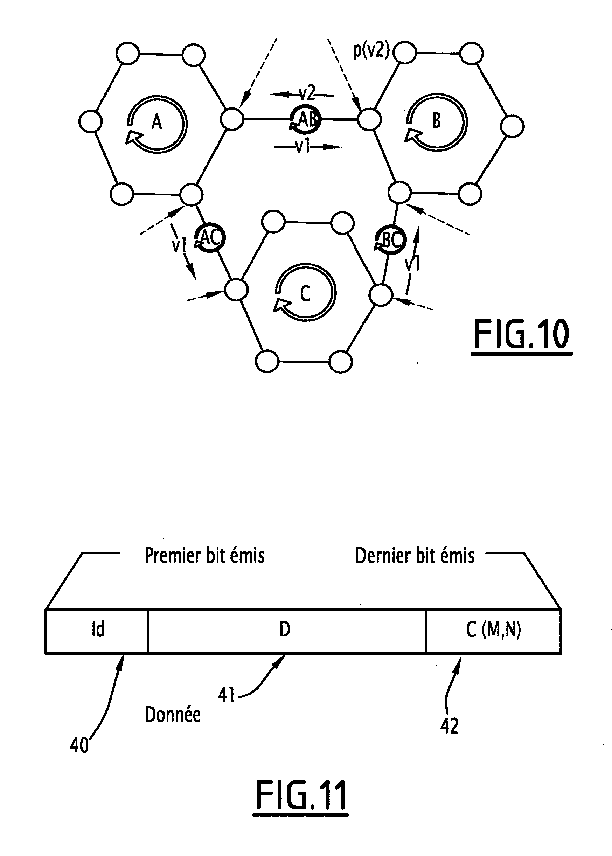

Ceci permet alors de multiplier le nombre de configurations de réseaux possibles avec de tels noeuds comme cela est illustré sur la figure 10, où l'on peut constater que des noeuds peuvent être raccordés en boucle fermée par des moyens de transmission d'informations correspondants.

Par ailleurs, des noeuds peuvent également être raccordés par des moyens de transmission d'informations en au moins une branche dont les noeuds d'extrémités sont adaptés pour fonctionner en mode miroir de renvoi des informations vers le noeud voisin émetteur, ou encore en branches de liaison d'autres noeuds raccordés en boucle fermée par des moyens de transmission d'informations.

Bien entendu, d'autres configurations encore peuvent être envisagées.

Enfin, on a illustré sur la figure 11, un exemple de réalisation possible d'un format de messages, celui-ci comportant de façon classique, un en-tête de message 40, des données 41 et une portion de contrôle désignée par la référence générale 42.

A cet effet, on pourra noter qu'au moins certains noeuds peuvent également comporter des moyens de génération d'informations d'erreur destinées à être émises en cas de non réception d'informations valides d'un noeud voisin dans une période de temps prédéterminée.

De même au moins certains de ces noeuds peuvent également comporter de façon classique dans ce type d'applications, des moyens de génération d'informations de service destinées à être émises sur le réseau.

Plusieurs autres caractéristiques du réseau de transmission d'informations et des moyens mis en oeuvre peuvent être relevées. C'est ainsi que :
- Les moyens de transmission d'informations peuvent comporter un lien série ou parallèle entre les noeuds.
- Les moyens de transmission d'informations peuvent comporter un support half ou full duplex physique entre les noeuds c'est-à-dire utilisant un même support dans les deux sens de circulation d'informations sur le réseau ou un support par sens, respectivement.
- Les moyens de transmission d'informations peuvent utiliser une couche physique choisie dans le groupe comprenant : un réseau. RS422, RS 485, Flexray, LIN, CAN, ARINC429, BD 429, ARINC629, Safebus, Ethernet, ARINC859, ATM, MIL-STD-1553, Digibus, ASCB, Spacewire, SCI, SPI, I2C, PCI, PClexpress, Fibre Channel, Firewire, USB et FDDI.
- Les moyens de transmission d'informations peuvent utiliser des formats de messages choisis dans le groupe comprenant des formats de trames: Flexray, LIN, CAN, TTP, ARINC429, ARINC629, Safebus, Ethernet, ATM, MIL-STD-1553, Digibus, ASCB, Spacewire, SCI, I2C, PCI, PClexpress, Fibre Channel, Firewire, USB et FDDI.
- Lesdits ports associés du noeud sont associés par programmation par exemple par les moyens formant automate de communication. Ces moyens formant automate de communication reçoivent alors des informations de programmation correspondante de l'association des ports, par exemple par le réseau directement, par un canal externe séparé et/ou indépendant de ce réseau ou encore à partir de moyens de stockage local de celles-ci, par exemple intégrés aux moyens formant automate de communication ou de façon générale, au noeud correspondant (Bitstream d'un FPGA,...).

Bien entendu, d'autres modes de réalisation encore peuvent être envisagés.

## Revendications

1. Réseau de transmission d'informations, du type comportant des noeuds fonctionnels (2, 3, 4 ; 10 ; 20 ; 30) raccordés en série par des moyens de transmission d'informations (5, 6, 7, 8 ; 11 ; 12), dans lequel les informations se présentent sous la forme de messages discrets se propageant de noeud en noeud (2, 3, 4 ; 10 ; 20 ; 30) dans le réseau, les moyens de transmission d'informations (5, 6, 7, 8 ; 11 ; 12) entre les noeuds (2, 3, 4 ; 10 ; 20 ; 30) étant bidirectionnels pour permettre à des informations de se propager dans les deux sens de circulation du réseau,
**caractérisé en ce que** chaque noeud (2, 3, 4 ; 10 ; 20 ; 30) comporte au moins un premier et un deuxième ports associés par programmation, d'entrée/sortie d'informations (13, 14 ; 21, 22 ; 31, 32, 33), raccordés par des moyens de transmission d'informations correspondants (5, 6, 7, 8 ; 11 ; 12) à des noeuds voisins et dont le fonctionnement est piloté de façon exclusive et séquentielle, par des moyens formant automate de communication (15), entre un mode de fonctionnement en réception asynchrone d'informations de ses noeuds voisins et un mode de fonctionnement en émission synchrone d'informations vers ses noeuds voisins.

2. Réseau de transmission d'informations selon la revendication 1, **caractérisé en ce que** l'automate de communication (15) est adapté pour faire basculer les ports associés du noeud (2, 3, 4 ; 10 ; 20 ; 30) de leur mode de fonctionnement en réception vers leur mode de fonctionnement en émission, après, pour chacun de ceux-ci :
- soit la réception d'informations valides,
- soit l'expiration d'une période de temps prédéterminée de non réception d'informations valides.

3. Réseau de transmission d'informations selon la revendication 2, **caractérisé en ce que** l'automate de communication (15) est adapté pour faire basculer en retour chacun des ports associés (13, 14 ; 21, 22 ; 31, 32, 33), de son mode de fonctionnement en émission vers son mode de fonctionnement en réception, après la fin de l'émission des informations par le port.

4. Réseau de transmission d'informations selon l'une quelconque des revendications précédentes, **caractérisé en ce que** les ports associés de chaque noeud (2, 3, 4 ; 10 ; 20 ; 30) sont raccordés à des moyens en forme de tampon en logique premier entré premier sorti.

5. Réseau de transmission d'informations l'une quelconque des revendications précédentes, **caractérisé en ce que** des noeuds comportent plus de deux ports d'entrée/sortie associés (13, 14 ; 21, 22 ; 31, 32, 33).

6. Réseau de transmission d'informations selon l'une quelconque des revendications précédentes, **caractérisé en ce que** les noeuds sont raccordés en boucle fermée par des moyens de transmission d'informations.

7. Réseau de transmission d'informations selon l'une quelconque des revendications 1 à 5, **caractérisé en ce que** les noeuds sont raccordés par des moyens de transmission d'informations, en au moins une branche dont les noeuds d'extrémité sont adaptés pour fonctionner en mode miroir de renvoi des informations vers le noeud voisin émetteur.

8. Réseau de transmission d'informations l'une quelconque des revendications 1 à 5, **caractérisé en ce que** les noeuds sont raccordés par des moyens de transmission d'informations, en branche de liaison d'autres noeuds raccordés en boucle fermée par des moyens de transmission d'informations.

9. Réseau de transmission d'informations selon l'une quelconque des revendications précédentes, **caractérisé en ce que** chaque noeud est adapté pour commuter en mode de fonctionnement en miroir de renvoi des informations vers un noeud voisin émetteur en cas de détection d'un dysfonctionnement.

10. Réseau de transmission d'informations selon l'une quelconque des revendications précédentes, **caractérisé en ce qu'**au moins certains noeuds comportent des moyens de génération d'informations de service destinées à être émises sur le réseau.

11. Réseau de transmission d'informations selon l'une quelconque des revendications précédentes, **caractérisé en ce qu'**au moins certains noeuds comportent des moyens de génération d'informations d'erreur destinées à être émises en cas de non réception d'informations valides d'un noeud voisin dans une période de temps prédéterminée.

12. Réseau de transmission d'informations selon l'une quelconque des revendications précédentes, **caractérisé en ce que** les moyens de transmission d'informations comportent des moyens de liaison filaire.

13. Réseau de transmission d'informations selon la revendication 12, **caractérisé en ce que** les moyens de transmission d'informations comportent des paires de fils torsadés.

14. Réseau de transmission d'informations selon la revendication 12, **caractérisé en ce que** les moyens de transmission d'informations comportent des câbles coaxiaux.

15. Réseau de transmission d'informations selon l'une quelconque des revendications 1 à 11, **caractérisé en ce que** les moyens de transmission d'informations comportent des fibres optiques.

16. Réseau de transmission d'informations selon l'une quelconque des revendications 1 à 11, **caractérisé en ce que** les moyens de transmission d'informations comportent des moyens de liaison sans fil.

17. Réseau de transmission d'informations selon l'une quelconque des revendications précédentes, **caractérisé en ce que** les ports associés par programmation du noeud sont associés par programmation par les moyens formant automate de communication.

18. Réseau de transmission d'informations selon la revendication 17, **caractérisé en ce que** les moyens formant automate de communication reçoivent des informations de programmation de l'association des ports, par un canal externe au réseau.

19. Réseau de transmission d'informations selon la revendication 17, **caractérisé en ce que** les moyens formant automate de communication reçoivent des informations de programmation de l'association des ports, par le réseau directement.

20. Réseau de transmission d'informations selon la revendication 17, **caractérisé en ce que** les moyens formant automate de communication reçoivent des informations de programmation de l'association des ports, à partir de moyens de stockage local de celles-ci.

21. Noeud fonctionnel de réseau de transmission d'informations, pour utilisation dans un réseau du type comportant un pluralité desdits noeuds fonctionnels (2, 3, 4; 10; 20; 30) raccordés en série par des moyens de transmission d'informations (5, 6, 7, 8; 11; 12), dans lequel les informations se présentent sous la forme de messages discrets se propageant de noeud en noeud (2, 3, 4 ; 1 0 ; 20 ; 30) dans le réseau, les moyens de transmission d'informations (5, 6, 7, 8 ; 11; 12) entre les noeuds (2, 3, 4; 10; 20; 30) étant bidirectionnels pour permettre à des informations de se propager dans les deux sens de circulation du réseau, ledit noeud étant **caractérisé en ce qu'**il comporte au moins un premier et un deuxième ports associés par programmation, d'entrée/sortie d'informations (13, 14; 21, 22; 31, 32, 33), raccordés par des moyens de transmission d'informations correspondants (5, 6, 7, 8 ; 11; 12) à des noeuds voisins et dont le fonctionnement est piloté de façon exclusive et séquentielle, par des moyens formant automate de communication (15), entre un mode de fonctionnement en réception asynchrone d'informations de ses noeuds voisins et un mode de fonctionnement en émission synchrone d'informations vers ses noeuds voisins.

## Patentansprüche

1. Informationsübertragungsnetzwerk des Typs, der funktionelle Knoten (2, 3, 4; 10; 20; 30) aufweist, die seriell mittels Informationsübertragungsmitteln (5, 6, 7, 8; 11; 12) verbunden sind, in dem die Informationen in der Form von diskreten Nachrichten, die sich im Netzwerk von Knoten zu Knoten (2, 3, 4; 10; 20; 30) ausbreiten, vorliegen, wobei die Informationsübertragungsmittel (5, 6, 7, 8; 11; 12) zwischen den Knoten (2, 3, 4; 10; 20; 30) bidirektional sind, damit sie es den Informationen ermöglichen, sich in beiden Zirkulationsrichtungen des Netzwerks auszubreiten,
dadurch charakterisiert, dass jeder Knoten (2, 3, 4; 10; 20; 30) mindestens ersten Anschluss und einen zweiten Anschluss, die durch Programmierung assoziiert sind, zum Informationseingang/Informationsausgang (13, 14; 21, 22; 31, 32, 33) aufweist, die durch entsprechende Informationsübertragungsmittel (5, 6, 7, 8; 11; 12) mit Nachbarknoten verbunden sind und deren Funktion auf exklusive und sequentielle Art durch Mittel, die einen Kommunikationsautomat (15) bilden, zwischen einem Funktionsmodus des asynchronen Empfangs von Informationen von ihren Nachbarknoten und einem Funktionsmodus des synchronen Sendens von Informationen an ihre Nachbarknoten gesteuert wird.

2. Informationsübertragungsnetzwerk gemäß Anspruch 1, dadurch charakterisiert, dass der Kommunikationsautomat (15) eingerichtet ist, die assoziierten Anschlüsse des Knotens (2, 3, 4; 10; 20; 30) von Ihrem Funktionsmodus des Empfangs in ihren Funktionsmodus des Sendens kippen zu lassen, nach, für jeden von ihnen:
- entweder dem Empfang von gültigen Informationen,
- oder dem Verstreichen eines vorgegebenen Zeitraums ohne Empfang von gültigen Informationen.

3. Informationsübertragungsnetzwerk gemäß Anspruch 2, dadurch charakterisiert, dass der Zustandsautomat (15) eingerichtet ist, jeden der assoziierten Anschlüsse 13, 14; 21, 22; 31, 32, 33) nach dem Ende des Sendens von Informationen durch den Anschluss umgekehrt von seinem Funktionsmodus des Sendens in seinen Funktionsmodus des Empfangs kippen zu lassen.

4. Informationsübertragungsnetzwerk gemäß einem der vorhergehenden Ansprüche, dadurch charakterisiert, dass die assoziierten Anschlüsse jedes Knotens (2, 3, 4; 10; 20; 30) mit den Mitteln in Form einer Warteschlange verbunden sind.

5. Informationsübertragungsnetzwerk gemäß einem der vorhergehenden Ansprüche, dadurch charakterisiert, dass die Konten mehr als zwei assoziierte Eingangs-/Ausgangsanschlüsse (13, 14; 21, 22; 31, 32, 33) aufweisen.

6. Informationsübertragungsnetzwerk gemäß einem der vorhergehenden Ansprüche, dadurch charakterisiert, dass die Knoten durch die Informationsübertragungsmittel in einem geschlossen Ring verbunden sind.

7. Informationsübertragungsnetzwerk gemäß einem der Ansprüche 1 bis 5, dadurch charakterisiert, dass die Knoten durch die Informationsübertragungsmittel in mindestens einem Zweig verbunden sind, dessen Endknoten eingerichtet sind, in einem Spiegelmodus des Rücksendens von Informationen zu ihrem Sendernachbarknoten zu arbeiten.

8. Informationsübertragungsnetzwerk gemäß einem der Ansprüche 1 bis 5, dadurch charakterisiert, dass die Knoten durch die Informationsübertragungsmittel in einem Verbindungszweig zu anderen, in einem durch die Informationsübertragungsmittel zu einem geschlossenen Ring verbundenen Knoten, miteinander verbunden sind.

9. Informationsübertragungsnetzwerk gemäß einem der vorhergehenden Ansprüche, dadurch charakterisiert, dass jeder Knoten eingerichtet ist, im Falle der Detektion einer Fehlfunktion in einen Spiegelfunktionsmodus des Rücksendens von Information an einen Sendernachbarknoten umzuschalten.

10. Informationsübertragungsnetzwerk gemäß einem der vorhergehenden Ansprüche, dadurch charakterisiert, dass mindestens bestimmte Knoten Mittel zum Erzeugen von Dienstinformationen, die zum Senden in das Netzwerk vorgesehen sind, aufweisen.

11. Informationsübertragungsnetzwerk gemäß einem der vorhergehenden Ansprüche, dadurch charakterisiert, dass mindestens bestimmte Knoten Mittel zum Erzeugen von Fehlerinformationen, die im Fall des Nichtempfangs von gültigen Informationen von einem Nachbarknoten in einem vorgegeben Zeitraum zum Senden vorgesehen sind.

12. Informationsübertragungsnetzwerk gemäß einem der vorhergehenden Ansprüche, dadurch charakterisiert, dass die Informationsübertragungsmittel drahtbasierte Verbindungsmittel aufweisen.

13. Informationsübertragungsnetzwerk gemäß Anspruch 12, dadurch charakterisiert, dass die Informationsübertragungsmittel verdrillte Drahtpaare aufweisen.

14. Informationsübertragungsnetzwerk gemäß Anspruch 12, dadurch charakterisiert, dass die Informationsübertragungsmittel Koaxialkabel aufweisen.

15. Informationsübertragungsnetzwerk gemäß einem der Ansprüche 1 bis 11, dadurch charakterisiert, dass die Informationsübertragungsmittel optische Fasern aufweisen.

16. Informationsübertragungsnetzwerk gemäß einem der Ansprüche 1 bis 11, dadurch charakterisiert, dass die Informationsübertragungsmittel drahtlose Verbindungsmittel aufweisen.

17. Informationsübertragungsnetzwerk gemäß einem der vorhergehenden Ansprüche, dadurch charakterisiert, dass die durch Programmierung assoziierten Anschlüsse des Knotens durch Programmierung durch die Mittel, die den Kommunikationsautomat bilden, miteinander assoziiert sind.

18. Informationsübertragungsnetzwerk gemäß Anspruch 17, dadurch charakterisiert, dass die Mittel, die den Kommunikationsautomat bilden, Programmierinformationen zur Assoziierung der Anschlüsse über einen dem Netzwerk gegenüber externen Kanal empfangen.

19. Informationsübertragungsnetzwerk gemäß Anspruch 17, dadurch charakterisiert, dass die Mittel, die den Kommunikationsautomat bilden, Programmierinformationen zur Assoziierung der Anschlüsse direkt über das Netzwerk empfangen.

20. Informationsübertragungsnetzwerk gemäß Anspruch 17, dadurch charakterisiert, dass die Mittel, die den Kommunikationsautomat bilden, Programmierinformationen zur Assoziierung der Anschlüsse ausgehend von lokalen Speichermitteln dieser empfangen.

21. Funktionaler Knoten eines Informationsübertragungsnetzwerks zur Verwendung in einem Informationsübertragungsnetzwerk des Typs, der funktionelle Knoten (2, 3, 4; 10; 20; 30) aufweist, die seriell mittels Informationsübertragungsmitteln (5, 6, 7, 8; 11; 12) verbunden sind, in dem die Informationen in der Form von diskreten Nachrichten, die sich im Netzwerk von Knoten zu Knoten (2, 3, 4; 10; 20; 30) ausbreiten, vorliegen, wobei die Informationsübertragungsmittel (5, 6, 7, 8; 11; 12) zwischen den Knoten (2, 3, 4; 10; 20; 30) bidirektional sind, damit sie es den Informationen ermöglichen, sich in beiden Zirkulationsrichtungen des Netzwerks auszubreiten, wobei der Knoten dadurch charakterisiert ist, dass er mindestens ersten Anschluss und einen zweiten Anschluss, die durch Programmierung assoziiert sind, zum Informationseingang/Informationsausgang (13, 14; 21, 22; 31, 32, 33) aufweist, die durch entsprechende Informationsübertragungsmittel (5, 6, 7, 8; 11; 12) mit Nachbarknoten verbunden sind und deren Funktion auf exklusive und sequentielle Art durch Mittel, die einen Kommunikationsautomat (15) bilden, zwischen einem Funktionsmodus des asynchronen Empfangs von Informationen von ihren Nachbarknoten und einem Funktionsmodus des synchronen Sendens von Informationen an ihre Nachbarknoten gesteuert wird.

## Claims

1. Data transmission network, of the type comprising functional nodes (2, 3, 4; 10; 20; 30) connected in series by data transmission means (5, 6, 7, 8; 11; 12), the data being in the form of discrete messages propagating from node to node (2, 3, 4; 10; 20; 30) in the network, the data transmission means (5, 6, 7, 8; 11; 12) between the nodes (2, 3, 4; 10; 20; 30) being bidirectional to enable data to be propagated in both flow directions of the network,
**characterised in that** each node (2, 3, 4; 10; 20; 30) comprises at least one first and one second data input/output port (13, 14; 21, 22; 31, 32, 33) associated by programming, connected by co-operating data transmission means (5, 6, 7, 8; 11; 12) to adjacent nodes and the operation of which is controlled exclusively and sequentially by means constituting a communication automaton (15) between an operating mode for receiving data asynchronously from adjacent nodes thereof and an operating mode for transmitting data synchronously to adjacent nodes thereof.

2. Data transmission network as claimed in claim 1, **characterised in that** the communication automaton (15) is configured to switch the ports associated with the node (2, 3, 4; 10; 20; 30) from their receiving operating mode to their transmitting operating mode after, for each of them:
- either receiving valid data,
- or on expiry of a predetermined period of time during which no valid data is received.

3. Data transmission network as claimed in claim 2, **characterised in that** the communication automaton (15) is configured to switch in return each of the associated ports (13, 14; 21, 22; 31, 32, 33) from its transmitting operating mode to its receiving operating mode after the transmission of data by the port has ended.

4. Data transmission network as claimed in any one of the preceding claims, **characterised in that** the associated ports of each node (2, 3, 4; 10; 20; 30) are connected to means of the first in-first out logic buffer type.

5. Data transmission network as claimed in any one of the preceding claims, **characterised in that** the nodes comprise more than two associated input/output ports (13, 14; 21, 22; 31, 32, 33).

6. Data transmission network as claimed in any one of the preceding claims, **characterised in that** the nodes are connected in a closed loop by data transmission means.

7. Data transmission network as claimed in any one of claims 1 to 5, **characterised in that** the nodes are connected by data transmission means in at least one branch, the end nodes of which are configured to operate in mirror mode for returning data to the adjacent transmitter node.

8. Data transmission network as claimed in any one of claims 1 to 5, **characterised in that** the nodes are connected by data transmission means in a branch linking other nodes connected in a closed loop by data transmission means.

9. Data transmission network as claimed in any one of the preceding claims, **characterised in that** each node is configured to switch to mirror operating mode to return data to an adjacent transmitter node if a malfunction is detected.

10. Data transmission network as claimed in any one of the preceding claims, **characterised in that** at least certain nodes comprise means for generating service data intended to be transmitted on the network.

11. Data transmission network as claimed in any one of the preceding claims, **characterised in that** at least certain nodes comprise means for generating error data intended to be transmitted if no valid data is received from an adjacent node during a predetermined period of time.

12. Data transmission network as claimed in any one of the preceding claims, **characterised in that** the data transmission means comprise hard-wired connection means.

13. Data transmission network as claimed in claim 12, **characterised in that** the data transmission means comprise pairs of twisted wires.

14. Data transmission network as claimed in claim 12, **characterised in that** the data transmission means comprise coaxial cables.

15. Data transmission network as claimed in any one of claims 1 to 11, **characterised in that** the data transmission means comprise optical fibres.

16. Data transmission network as claimed in any one of claims 1 to 11, **characterised in that** the data transmission means comprise wireless connection means.

17. Data transmission network as claimed in any one of the preceding claims, **characterised in that** the ports associated with the node by programming are associated by programming by the means constituting a communication automaton.

18. Data transmission network as claimed in claim 17, **characterised in that** the means constituting a communication automaton receive programming data for associating the ports via a channel outside the network.

19. Data transmission network as claimed in claim 17, **characterised in that** the means constituting a communication automaton receive programming data for associating the ports directly via the network.

20. Data transmission network as claimed in claim 17, **characterised in that** the means constituting a communication automaton receive programming data for associating the ports from local storage means thereof.

21. Functional node of a data transmission network for use in a network of the type comprising a plurality of said functional nodes (2, 3, 4; 10; 20; 30) connected in series by data transmission means (5, 6, 7, 8; 11; 12), the data being in the form of discrete messages propagating from node to node (2, 3, 4; 10; 20; 30) in the network, the data transmission means (5, 6, 7, 8; 11; 12) between the nodes (2, 3, 4; 10; 20; 30) being bidirectional to enable data to be propagated in both flow directions of the network, said node being **characterised in that** it comprises at least one first and one second data input/output port (13, 14; 21, 22; 31, 32, 33) associated by programming, connected by co-operating data transmission means (5, 6, 7, 8; 11; 12) to adjacent nodes and the operation of which is controlled exclusively and sequentially by means constituting a communication automaton (15) between an operating mode for receiving data asynchronously from adjacent nodes thereof and an operating mode for transmitting data synchronously to adjacent nodes thereof.
